# DEMANDE DE BREVET EUROPEEN

(11) **EP 0 735 124 A1**
(43) Date de publication de la demande: **02.10.1996**
(21) Numéro de dépôt: 96400637.3
(22) Date de dépôt: 26.03.1996
(51) Int. Cl.: C09K 5/04, C09K 3/30

(54) **Composite actif à structure feuilletée et son utilisation comme milieu réactionnel**

(30) Priorité: 28.03.1995 FR 9503614
(71) Demandeur: ELF AQUITAINE, F-92400 Courbevoie (FR); LE CARBONE LORRAINE, 92231 Gennevilliers (FR)
(72) Inventeur: Bou, Pierre, 95230 Soisy Sous Montmorency (FR); Moreau, Michel, 92110 Clichy (FR); Prades, Philippe, 66000 Perpignan (FR)
(74) Mandataire: Timoney, Ian Charles Craig

(57) **Abrégé**

Composite actif constitué d'un support comprimé et d'au moins un agent actif vis-à-vis d'un gaz, le support comprimé comprenant du graphite expansé recomprimé ayant une densité comprise entre 0,02 et 1,5. Selon l'invention le composite actif est formé d'une série de feuilles superposées les unes sur les autres, l'agent actif étant dispersé dans les feuilles.

## Description

La présente invention se rapporte à un composite actif à structure feuilletée constitué d'un support comprimé en forme de feuilles et d'un agent actif vis-à-vis d'un gaz. La présente invention se rapporte également à un procédé de mise en oeuvre de processus physico-chimiques, gaz-solide ou gaz-liquide utilisant comme milieu réactionnel un tel composite actif.

Dans certains domaines comme par exemple celui des pompes à chaleur chimiques basées sur la thermicité de la réaction entre un solide et un gaz, ou de l'adsorption sur un solide d'un gaz, on utilise un mélange d'un matériau divisé, tel que le graphite expansé, et d'un réactif solide, par exemple un sel, ou un adsorbant comme une zéolite. Le mélange de graphite expansé et de ce solide, siège d'une réaction chimique ou d'une adsorption physique, présente de nombreux avantages lors d'une réaction chimique ou d'une adsorption physique entre le solide et un gaz. Le graphite expansé se présentant sous forme de feuillets ou de particules feuilletées a une très grande surface spécifique et permet la diffusion du gaz même en milieu confiné.

L'amélioration substantielle des cinétiques de réaction solide-gaz renversables observée, comme résultant du mélange du solide actif avec du graphite naturel expansé par voie thermique, dans des proportions massiques données et compactées dans un volume fixé résulte d'une excellente perméabilité du lit fixe ainsi préparé au gaz réactif et d'une conductivité thermique accompagnée d'un bon coefficient d'échange thermique aux parois. De manière classique, la préparation d'un tel réactif conduit à un lit isotrope homogène dont la conductivité isotrope se situe à des valeurs de 0,5 à 2 Wm⁻¹K ⁻¹ suivant les conditions de préparation (proportion et compactage), et dont le coefficient d'échange aux parois se situe entre 50 à 150 Wm⁻² K⁻¹.

Malgré ces avantages, l'utilisation de tels mélanges à l'état granulaire présente des inconvénients du fait de la difficulté à obtenir des mélanges réellement homogènes, de leur manutention difficile et du volume important qu'ils occupent. De plus, le réactif, souvent hygroscopique, a tendance à absorber l'humidité si l'opération de mélange est longue ; une déshydratation ultérieure est longue, voire coûteuse et peut influer sur la qualité du produit final même après déshydratation.

Le document WO91/15292 décrit un composite actif en forme de bloc homogène qui comprend du graphite expansé recomprimé, imprégné par la suite avec un agent actif, par exemple, un sel. Ce type de composite actif présente des avantages importants par rapport aux mélanges pulvérulents contenant du graphite expansé décrits ci-dessus, mais, néanmoins il est difficile à réaliser. Ces difficultés concernent plus particulièrement la répartition du sel dans le bloc de manière uniforme. De plus, la recompression du graphite expansé a typiquement lieu dans un ensemble piston-cylindre ce qui donne des blocs de forme exclusivement cylindrique. Certaines applications du composite actif demandent, de préférence, des formes autres que des cylindres.

Les procédés de fabrication du graphite expansé sont bien connus, en particulier par le brevet US 3 404 061. Ces procédés, dits d'exfoliation du graphite, comprennent une phase d'expansion rapide par chauffage d'un complexe graphitique qui produit une poudre de graphite expansé en vermicules.

La présente invention a donc pour objet un composite actif à structure feuilletée qui offre une excellente perméabilité à un flux gazeux et présente de bonnes propriétés de conductivité thermique, tout en étant facile à réaliser.

Pour ce faire, l'invention propose un composite actif constitué d'un support comprimé et d'au moins un agent actif vis-à-vis d'un gaz, le support comprimé comprenant du graphite expansé recomprimé ayant une densité comprise entre 0,02 et 1,5 caractérisé en ce que le composite actif est formé d'une série de feuilles superposées les unes sur les autres, l'agent actif étant dispersé dans les feuilles..

Selon un mode de réalisation préféré, le composite actif à structure feuilletée comprend de 5 à 95 % en poids de graphite expansé recomprimé et de 95 à 5 % en poids d'agent actif.

L'invention propose également un procédé de mise en oeuvre de processus physico-chimiques solide-gaz ou solide-liquide caractérisé en ce qu'il utilise comme milieu réactionnel un composite actif constitué d'un support comprimé et d'un agent actif vis-à-vis d'un gaz, le support comprimé comprenant du graphite expansé recomprimé ayant une densité comprise entre 0,02 et 1,5 et comprenant une série de feuilles superposées les unes sur les autres, l'agent actif étant dispersé dans les feuilles.

Un tel composite actif est destiné à être utilisé pour mettre en oeuvre soit une réaction de type solide-gaz, soit une adsorption entre un gaz et un solide, soit l'absorption d'un gaz dans un liquide, par exemple une solution saturée ou non d'un solide, soit une réaction entre un gaz et un liquide catalysée par un solide, soit le siège d'une condensation/évaporation d'un gaz, soit enfin la réaction de transformation d'un gaz catalysée par un solide. Ainsi, la présente invention propose un procédé de mise en oeuvre soit de réactions du type gaz-solide, soit d'adsorption gaz-solide, soit d'absorption d'un gaz dans un liquide, soit enfin de transformation catalytique d'un gaz en utilisant comme milieu réactionnel un bloc de composite actif selon l'invention.

Le composite actif selon l'invention doit présenter une très forte anisotropie en transferts thermique qui résultera de la compression ordonnée des feuillets de graphite très bons conducteurs de la chaleur, tout en conservant une grande porosité permettant une bonne diffusion du gaz jusqu'à chaque site actif que l'on dispose sensiblement uniformément dans le composite.

Le composite actif selon l'invention dont la densité est comprise entre 0,02 et 1,5 présente une anisotropie de conductivité thermique importante, c'est-à-dire que la conductivité thermique C₁ selon une première direction D₁ du composite actif est nettement plus importante que celle obtenue selon une autre direction D₂ du composite perpendiculaire à la première. Le composite actif selon l'invention présente un coefficient d'anisotropie, qui est le rapport C₁/C₂, compris entre 3 et 150 et de préférence entre 10 et 100.

Par ailleurs, le composite actif selon l'invention doit présenter une certaine porosité permettant aux gaz d'atteindre les sites actifs.

La porosité totale du composite correspond au pourcentage de vide au sein dudit composite qui s'obtient aisément à partir de sa densité mesurée comparée à la densité du graphite naturel : 2,2.

La caractéristique importante du composite est la porosité ouverte représentative de l'accessibilité des liquides et gaz aux sites actifs. Cette porosité ouverte s'exprime en pourcentage de la porosité totale. Elle est déterminée en mesurant la quantité d'eau, maintenue à la pression atmosphérique, absorbée par le bloc auquel on applique une pression de 0,02 bar.

La porosité ouverte du composite est généralement comprise entre 32 et 99,1 % de sa porosité totale. Dans cet intervalle, elle dépendra dans une large mesure de la densité choisie pour le composite dans l'application envisagée.

D'autres caractéristiques et avantages de la présente invention apparaîtront plus clairement à la lecture de la description suivante, faite en référence aux dessins annexés sur lesquels :
- la figure 1 est une vue schématique en coupe d'un composite actif à structure feuilletée selon l'invention ;
- la figure la est une vue détaillée d'un élément de la figure 1; et
- les figures 2a et 2b sont des courbes des caractéristiques de réaction de composites actifs selon l'invention, et selon l'art antérieur.

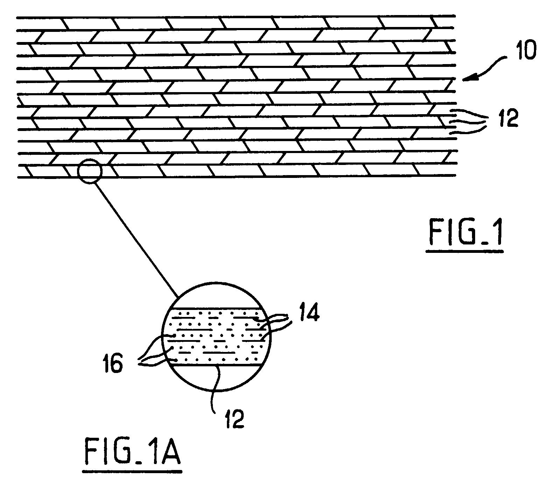

Comme représenté sur la figure 1, un composite actif à structure feuilletée 10 est formé de plusieurs feuilles 12 de structure analogue, superposées les unes sur les autres. Chaque feuille est réalisée à partir de graphite expansé sous forme pulvérulente qui est comprimé par des rouleaux afin de former un support comprimé pour l'agent actif. La compression s'effectue en plusieurs étapes, la densité de la feuille produite augmentant à chaque étape. Après une ou plusieurs étapes de compression, la feuille est imprégnée d'agent actif. Cette imprégnation peut s'effectuer, par exemple, en immergeant la feuille dans une solution de l'agent actif puis en séchant la feuille imprégnée afin de laisser l'agent actif dispersé dans la feuille. De préférence, la feuille est recomprimée après l'opération de séchage.

Lors de la recompression du graphite expansé, les feuillets de graphite s'alignent. Cette structure est illustrée à la figure 1a où sont représentés des feuillets 14, disposés de manière parallèle, entre lesquels sont dispersés des cristaux 16 du sel.

La réalisation d'une feuille 12 imprégnée d'agent actif s'effectue de manière continue. Ensuite, la feuille continue est découpée afin de créer de nombreuses feuilles de dimensions analogues qui sont superposées comme représentées à la figure 1. L'ensemble de feuilles superposées peut être éventuellement soumis à une nouvelle compression.

Ainsi on peut réaliser un composite actif à structure feuilletée dont on peut aisément choisir les dimensions ainsi que la forme.

Le composite actif à structure feuilletée selon l'invention peut être réalisé à partir de nombreux agents actifs différents tels que ceux proposés par exemple dans le tableau I. Par agent actif, on entend par exemple un solide réactif, un solide absorbant, un liquide absorbant ou un solide agissant comme catalyseur.

**TABLEAU I**

| Nature de l'interaction agent actif-gaz | Agents actifs | Gaz |
|---|---|---|
| Réactions solide-gaz (renversables) | Halogénures | Eau |
| | Pseudohalogénures | _{NH₃ et dérivés (amines)} |
| | Carbonates | |
| | Sulfates | |
| | Nitrates | |
| | Oxydes | CO₂ |
| | | SO₂ |
| | | SO₃ |
| | Métaux alliages métalliques | O₂ |
| | | H₂ |
| | | Hydrocarbures |
| | Hydrures métalliques | H₂ |
| Absorption liquide-gaz (renversable) et absorption liquide saturé-gaz (renversables) | Solutions aqueuses | Eau |
| | halogénures | |
| | pseudo-halogénures | |
| | Carbonates | |
| | Sulfates | |
| | Nitrates | |
| | Solutions dans NH₃ liq. | NH₃ et dérivés |
| | Halogénures | |
| | pseudohalogénures | |
| | Carbonates | |
| | Sulfates | |
| | Nitrates | |
| Adsorption solide-gaz | Zéolithe | Eau |
| | Charbon actif | Méthanol et dérivés |
| (renversable) | Silicagel Oxyde phosphorique | |
| Catalyse hétérogène | Ni + C₆ H₆ | H₂ |

Dans le cas où le support comprimé est destiné à être imprégné avec des chlorures, le tableau II précise la nature de liquides d'imprégnation solubilisant l'agent actif ou le mettant en suspension.

**TABLEAU II**

| Agent actif | Liquide d'imprégnation | |
|---|---|---|
| | de solubilisation | de suspension |
| CaCl₂ | Eau ou alcool, acétone | |
| MnCl₂ | alcool | éther, NH₃ liquide |
| BaCl₂ | alcool | |
| NiCl₂ | alcool, NH₄OH | NH₃ liquide |
| CuCl₂ | acétone | |
| CoCl₂ | alcool, acétone, éther | |
| SrCl₂ | alcool, acétone | NH₃ liquide |
| NaCl₂ | glycérine | |
| FeCl₂ | alcool, acétone | éther |
| NH₄Cl | alcool, NH₃ liquide | acétone, éther |
| CdCl₂ | alcool | acétone, éther |

### Exemple 1 :

Un bloc de composite actif pour pompe à chaleur chimique, noté R1, a été fabriqué selon l'art antérieur. Pour cela, une poudre de graphite naturel expansé a été obtenue selon le procédé décrit dans le brevet US-3 404 061. Cette poudre a ensuite été comprimée dans un moule jusqu'à une densité égale à 0,2, puis imprégnée d'une solution aqueuse de MnCl₂. L'imprégnation a été effectuée dans un autoclave sous une pression de 6 bars après avoir créé un vide primaire. Le taux de sel dans le bloc composite était de 55 % en poids. Le bloc de composite actif ainsi obtenu a finalement été séché à 220°C pendant 48 heures. Le bloc était de forme cylindrique, d'une hauteur de 100 mm et d'un diamètre de 150 mm.

Un second composite actif, selon l'invention, pour pompe à chaleur chimique, noté R2, a été fabriqué. Pour cela, une poudre de graphite naturel expansé a été préparée selon un procédé comparable à celui utilisé pour fabriquer le bloc de composite actif selon l'art antérieur. Cette poudre de graphite naturel expansé a ensuite subi une pré-densification jusqu'à une densité de 0,03 et une épaisseur de 10 mm, dans un premier laminoir, puis une étape d'imprégnation par pulvérisation en continu d'une solution aqueuse de MnCl₂ contenant du Teepol (R) comme agent mouillant, puis une étape de séchage dans un four à défilement à 220°C pendant environ 30 minutes, puis une étape de densification finale jusqu'à une densité de graphite dans le composite de 0,2 et une épaisseur de 1,5 mm dans un deuxième laminoir. La bande ainsi obtenue a ensuite été revêtue d'un mat de carbone, puis découpée en disques de 150 mm de diamètre percés en leur centre d'un trou de5 mm de diamètre, formant ainsi des feuilles de composite de base. Un composite actif a enfin été obtenu par empilement de 67 feuilles. La nature et le taux du sel réactif étaient les mêmes que pour le bloc de composite actif selon l'art antérieur.
Les deux produits ont été mis à l'essai dans le même réacteur et dans les mêmes conditions. Une série de 20 cycles de synthèse et décomposition a été réalisée avec un avancement des réactions de synthèse de 80 %, dans les mêmes conditions thermodynamiques de pression et températures imposées au réacteur. Les conductivités en début de synthèse (S) et en début de décomposition (S'), les coefficients de contact à la paroi du réacteur en début de synthèse (C) et en début de décomposition (C') et les temps de synthèse à 80 % (T) et de décomposition complète (T') ont été mesurés. Le tableau ci-dessous regroupe les résultats obtenus.

| | R1 | R2 |
|---|---|---|
| | Art antérieur | Invention |
| S (W/m.K) | 18 | 25 |
| S' (W/m.K) | 17 | 18 |
| C (W/m2.K) | 70 | 480 |
| C' (W/m2.K) | 1800 | 3800 |
| T (min) | 20 | 12 |
| T' (min) | 80 | 24 |

### Exemple 2 :

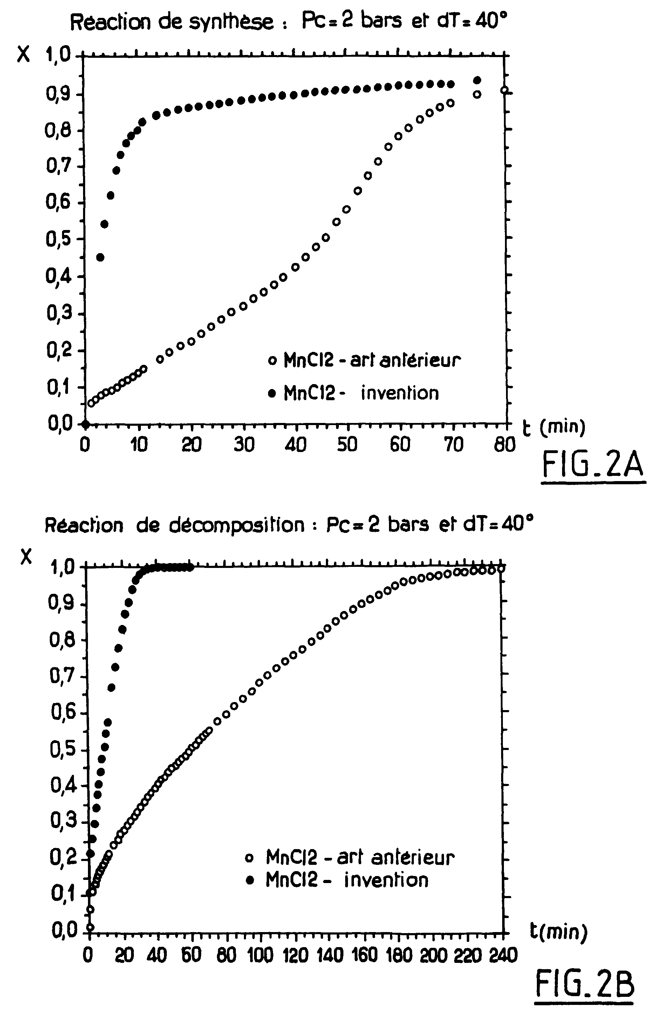

Un bloc de composite actif, selon le document WO91/15292, a été réalisé, le graphite expansé recomprimé ayant une densité, avant imprégnation de 0,166. Ce bloc comportait 63 % en poids de MnCl₂. Un composite actif, selon l'invention, a également été réalisé avec une densité de graphite, avant imprégnation, de 0,16. Ce composite actif comportait 47 % de MnCl₂.
Comme il ressort des figures 2A et 2B, la vitesse de transformation du composite selon l'invention est nettement plus rapide, par rapport à celui de l'art antérieur classique en raison d'un coefficient d'échange thermique à la paroi plus important : 300 W/m2.K pour le composite actif selon l'invention et seulement 30 W/m2.K pour le composite antérieur. Ces valeurs correspondent aux valeurs initiales, avant le début de la réaction de synthèse. Pour le composite antérieur, sa vitesse de transformation devient plus rapide au-delà du temps t=40 minutes en raison de l'augmentation de la valeur du coefficient d'échange de la paroi.
En réaction de décomposition, la vitesse de transformation du composite actif selon l'invention est plus rapide car le coefficient d'échange à la paroi ne se dégrade pas au cours de la réaction alors qu'il varie de 1200 W/m2.K à 30 W/m2.K pour le composite antérieur.

Comme un bloc de composite actif est formé à partir de feuilles superposées les unes sur les autres, on peut préparer différents types de blocs en fonction de l'application qui leur est destinée. Dans le cas le plus simple, un bloc de composite actif est réalisé à partir de feuilles ayant la même densité, chaque feuille comportant le même agent actif dans les mêmes proportions. Le bloc ainsi réalisé a une structure homogène.

On peut également utiliser des feuilles ayant des densités différentes pour réaliser le bloc de composite actif, par exemple afin de créer un bloc dont la densité croît ou décroît progressivement à travers son épaisseur. Ce type de bloc peut être réalisé à partir de feuilles de densités différentes comportant chacune le même agent actif, soit dans les mêmes proportions, soit dans des proportions qui varient en fonction de la densité des feuilles.

En plus, en imprégnant des feuilles au moyen de différents agents actifs, de préférence un agent actif par feuille, il est possible de constituer des blocs de composite actif comportant différents agents actifs dans des zones du bloc, et en proportions prédéterminées. Ce type de bloc peut avantageusement être réalisé à partir de feuilles de densités différentes.

Ainsi, selon l'invention, on peut réaliser divers types de composite actif dont la densité des feuilles, la nature de l'agent actif et ses proportions dans le bloc peuvent être aisément sélectionnées.

Le composite actif selon l'invention présente ainsi de meilleurs performances étant donné qu'il dispose d'une plus grande tenue mécanique (faible variation du volume occupé par le réactif) et permet ainsi, d'obtenir des coefficients d'échange thermique à la paroi non limitant pour le procédé.

Ces résultats montrent que le composite actif selon l'invention présente des performances nettement supérieures à celles du composite actif de l'art antérieur.

## Revendications

1. Composite actif constitué d'un support comprimé et d'au moins un agent actif vis-à-vis d'un gaz, le support comprimé comprenant du graphite expansé recomprimé ayant une densité comprise entre 0,02 et 1,5 caractérisé en ce que le composite actif est formé d'une série de feuilles superposées les unes sur les autres, l'agent actif étant dispersé dans les feuilles.

2. Composite actif selon la revendication 1 caractérisé en ce qu'il comprend des feuilles d'une épaisseur comprise entre 0,5 mm et 20 mm.

3. Composite actif selon la revendication 1 ou 2 caractérisé en ce qu'il comprend de 5 à 95 % en poids de graphite expansé recomprimé et de 95 à 5 % en poids d'agent actif.

4. Composite actif selon la revendication 1, 2 ou 3 caractérisé en ce qu'il présente une anisotropie de conductivité thermique.

5. Composite actif selon la revendication 4 caractérisé en ce que le coefficient d'anisotropie C₁/C₂ est compris entre 3 et 150.

6. Composite actif selon l'une des revendications 1 à 5 caractérisé en ce que sa porosité ouverte est comprise entre 32 et 99 % de la porosité totale du composite.

7. Composite actif selon l'une des revendications 1 à 6 caractérisé en ce qu'il est formé de feuilles ayant la même densité.

8. Composite actif selon l'une des revendications 1 à 6 caractérisé en ce qu'il est formé de feuilles ayant des densités différentes;

9. Composite actif selon l'une des revendications 1 à 8 caractérisé en ce qu'il comporte différents agents actifs, chacun dispersé dans une feuille.

10. Composite actif selon l'une des revendications 1 à 9 caractérisé en ce que l'agent actif est dispersé dans les feuilles en proportions différentes.

11. Procédé de mise en oeuvre de processus physico-chimiques mettant en oeuvre un gaz et soit un solide réactif, soit un solide adsorbant, soit un liquide absorbant saturé ou non, soit un solide agissant comme catalyseur, soit le siège d'une condensation/évaporation d'un gaz caractérisé en ce qu'il utilise comme milieu réactionnel un composite actif selon l'une des revendications 1 à 10.

12. Procédé selon la revendication 11 caractérisé en ce qu'il utilise un solide réactif qui est un sel.

13. Procédé selon la revendication 11 caractérisé en ce qu'il utilise un solide adsorbant.

14. Procédé selon la revendication 11 caractérisé en ce qu'il utilise un liquide absorbant d'un gaz.

15. Procédé selon la revendication 11 caractérisé en ce qu'il utilise un solide réactif qui est un métal.

16. Procédé selon la revendication 11 caractérisé en ce qu'il utilise un solide agissant comme un catalyseur.

17. Procédé de mise en oeuvre de processus physico-chimiques gaz-solide ou gaz-liquide caractérisé en ce qu'il utilise comme milieu réactionnel un composite actif constitué d'un support comprimé et d'au moins un agent actif vis-à-vis d'un gaz, le support comprimé comprenant du graphite expansé recomprimé ayant une densité comprise entre 0,02 et 1,5 et comprenant une série de feuilles superposées les unes sur les autres, l'agent actif étant dispersé dans les feuilles.

18. Procédé selon la revendication 17 caractérisé en ce que l'agent actif est un sel.

19. Procédé selon la revendication 17 caractérisé en ce que l'agent actif est un solide adsorbant.

20. Procédé selon la revendication 17 caractérisé en ce que l'agent actif est un liquide adsorbant d'un gaz.

21. Procédé selon la revendication 17 caractérisé en ce que l'agent actif est un métal.
